# EUROPEAN PATENT SPECIFICATION

(11) **EP 2 827 245 B1**
(45) Date of publication and mention of the grant of the patent: **19.10.2016**
(21) Application number: 14002013.2
(22) Date of filing: 11.06.2014
(51) Int. Cl.: H04L 12/911, G06F 9/50

(54) **Enabling multi-tenant virtual servers in a cloud system**
Ermöglichung von mandantenfähigen virtuellen Servern in einem Cloud-System
Activation de serveurs virtuels à utilisateurs multiples dans un système informatique en nuage

(30) Priority: 27.06.2013 US 201313929188
(43) Date of publication of application: 21.01.2015
(73) Proprietor: SAP SE, 69190 Walldorf (DE)
(72) Inventor: Helfman, Nadav Binyamin, 69190 Walldorf (DE); Bendelac, Chaim, 69190 Walldorf (DE); Baeuerle, Stefan, 69190 Walldorf (DE); Ben Dror, Eran, 69190 Walldorf (DE)
(74) Representative: Müller-Boré & Partner Patentanwälte PartG mbB

(56) References cited:
- US-A1- 2010 312 893
- US-A1- 2012 215 918
- US-A1- 2012 260 247

## Description

### TECHNICAL BACKGROUND

This disclosure relates to enabling multi-tenant virtual servers in a cloud system and, more particularly, allowing cloud systems to provide software-as-a-service (SaaS) and platform-as-a-service (PaaS) functionality using processes developed around infrastructure-as-a-service (IaaS) offerings.

### BACKGROUND

Cloud computing systems may enable clients to allocate and deallocate processing, memory, and storage resources on demand, thereby freeing the clients from maintaining the physical hardware for these services themselves. In some cases, the clients may perform the allocation and deallocation of cloud resources on the fly using application programming interfaces (APIs) provided by a cloud provider. The cloud provider may track the client's usage of the cloud resources (e.g., processor time, memory, etc.) and bill the client accordingly.
US 2012/0260247 A1 discloses a computer implemented method, a computer program product and a data processing system that allocate resources within a computing organization. A hypervisor layer is implemented on an underlying hardware. The hypervisor layer comprises a set of virtual machines. A first pseudo-hypervisor layer is then implemented within a first one of the set of virtual machines of the hypervisor layer. The first pseudo-hypervisor layer comprises a second set of virtual machines. A first software component is located within a first virtual machine of the second set of virtual machines of the first pseudo-hypervisor layer. A second software component is collocated within a second virtual machine of the second set of virtual machines of the first pseudo-hypervisor layer.
US 2012/0215918 A1 discloses a system and method for providing services to multiple tenants. A system provides a gateway that acts as an intermediary between the tenants and multiple subsystems that provide resources. A management gateway handles requests to manage resources. A runtime gateway handles requests to perform operations related to the resources. A set of protocol handlers isolates the subsystems from protocols used by the tenants. A pipeline of components provides processing, such as authorization, of requests from tenants. Identification of resources is performed using a mechanism that enables multiple namespaces, which may be designated by tenants.
US 2010/0312893 A1 discloses a resource management method executed by an information processing system having a plurality of physical servers 104 and a plurality of virtual servers 120 to be operated on the physical server, and a management server 101 connected to the physical server via a network 207 to specify the virtual server associated to a resource pool 130 and the physical server for operating the virtual server, collect performance information of the specified physical server, and calculate the performance information of the resource pool on the basis of the collected performance information.

### SUMMARY

The present disclosure relates to computer-implemented methods, computer-readable media, and computer systems for enabling multi-tenant virtual servers in a cloud system. One computer-implemented method includes receiving a request at the virtual server according to the infrastructure protocol, the infrastructure protocol configured to perform actions on virtual server resources; determining an application associated with the request; and performing one or more actions associated with the request using a set of application resources associated with the application.

Details of one or more implementations of the subject matter described in this specification are set forth in the accompanying drawings and the description below. Other features, aspects, and potential advantages of the subject matter will become apparent from the description, the drawings, and the claims. Other implementations of this aspect include corresponding computer systems, apparatuses, and computer programs recorded on one or more computer storage devices, each configured to perform the actions of the methods. A system of one or more computers can be configured to perform particular operations or actions by virtue of having software, firmware, hardware, or a combination of software, firmware, or hardware installed on the system that in operation causes or causes the system to perform the actions. One or more computer programs can be configured to perform particular operations or actions by virtue of including instructions that, when executed by data processing apparatus, cause the apparatus to perform the actions.

The foregoing and other implementations can each optionally include one or more of the following features, alone or in combination. In a first aspect combinable with any of the general implementations, receiving the request is performed by a communication proxy separate from the virtual server.

A second aspect combinable with any of the previous aspects further includes identifying one or more tenants associated with the virtual server in the cloud system; determining one or more network addresses, each network address uniquely associated with one of the one or more tenants; identifying a particular network address associated with the request; and determining a particular tenant associated with the particular network address.

In a third aspect combinable with any of the previous aspects, the application is associated with the particular tenant.

A fourth aspect combinable with any of the previous aspects further includes identifying a requested resource associated with the request, the requested resource associated with the application and the particular tenant and identified in the request in a generic format; and transforming the request to identify the requested resource in a format specific to the particular tenant.

In a fifth aspect combinable with any of the previous aspects, the requested resource is a database table and transforming the request includes transforming a table name associated with the database table into a table name specific to the particular tenant.

In a sixth aspect combinable with any of the previous aspects, the requested resource is a web page and transforming the request includes transforming a Uniform Resource Locator (URL) associated with the web page into a URL specific to the particular tenant.

In a seventh aspect combinable with any of the previous aspects, the determined network address is an Internet Protocol (IP) address.

An eighth aspect combinable with any of the previous aspects further includes providing usage statistics associated with the application resources.

In a ninth aspect combinable with any of the previous aspects, providing usage statistics associated with the application resources includes providing at least one of: requests per second, memory usage, or concurrent connections.

In a tenth aspect combinable with any of the previous aspects, providing usage statistics associated with the application resources includes updating a standard file system location that indicates usage statistics for a virtual server.

In an eleventh aspect combinable with any of the previous aspects, providing usage statistics associated with the application resources includes providing Simple Network Management Protocol (SNMP) messages that indicate the usage statistics.

The details of one or more implementations of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example distributed computing system for enabling multi-tenant virtual servers in a cloud system;
FIG. 2 illustrates an example system for providing access to multiple tenants on virtual servers in a cloud system to multiple clients;
FIG. 3 illustrates an example system for providing access to multiple tenants on virtual servers in a cloud system to multiple clients using a communication proxy; and
FIG. 4 illustrates an example method for enabling multi-tenant virtual servers in a cloud system.

### DETAILED DESCRIPTION

Infrastructure-as-a-Service (IaaS) is an evolving business model whereby a cloud service provider offers, provides and provisions computing resources on demand, generally in the form of a virtual server, to a client (e.g., an end user, software process, or other external system). In some cases, the client may select a set of computing resources, such as processor, memory, storage and/or network configurations, from a list or a template, offered by the cloud service provider, to create a virtual server.

Due to the widespread adoption of IaaS, a number of application programming interfaces (APIs) for governing cloud infrastructure offerings have been created. These APIs govern the ordering, specification, monitoring and management of the IaaS resources and virtual servers, and typically use web-service technologies like Extensible Markup Language (XML) or JavaScript Object Notation (JSON). Examples of IaaS APIs include, but are not limited to, IBM® IaaS Resource Model and Representational State Transfer (REST) APIs, Amazon® EC2, OpenStack®, and Microsoft® HyperV. The IaaS APIs have given rise to various IaaS management, monitoring, and provisioning tools, such as, for example, Amazon® EC2 plugins for Nagios®, Cisco® Intelligent Automation for Cloud with EC2 and OpenStack® support, and Alcatel-Lucent® CloudBand which supports EC2 and OpenStack®.

Cloud solutions are evolving from an IaaS model to a platform-as-a-service model (PaaS). In this model, a cloud provider offers computing platform software typically including operating system, database, and web server software. A client can run software applications on such a cloud platform software without the cost and complexity of managing the underlying hardware and software layers. Cloud solutions are taking this concept of abstract services another step forward, and offering complete application solutions in the form of software-as-a-service (SaaS). In all these cases, from the perspective of the client, the expectation is just to be able to use the platform software or application software, regardless of the underlying hardware architecture.

IaaS infrastructure offerings may provide a capability of provisioning virtual servers which are derived from templates for configured and ready-to-use systems. With proper API support, this may be a practical method to provide and provision the PaaS and SaaS experience as well. However, this may be technically challenging because the unit of resource allocations, at the physical server level, may be too coarse, and may impose an impractical limit on resource allocation and utilization and thus on the total cost of ownership and quality of service of the client's entire solution. In PaaS, the platform software may itself manage and further divide the underlying virtual server resources as an internally shared fine-grained resource, for instance by using multi tenancy technology. These fine-grained resources may be offered and provisioned in units that make sense in the context of the platform service, such as transactions per second, maximal concurrent clients, etc.

In PaaS environments, unlike IaaS, governance APIs and solutions are still evolving, and have not yet standardized. Accordingly, the present disclosure describes a solution which may allow the usage of existing IaaS tools for the management and consumption of platform services. Such a solution may also enable seamless migration from dedicated servers to shared servers, while the platform software such as the database stays the same.

In one example implementation, the fine-grained resources are exposed to clients as emulated virtual servers. An emulated virtual server may have a dedicated virtual address, resource monitoring interfaces which emulates server level information, and any other suitable capabilities for supporting existing like IaaS APIs and tools. Each emulated virtual server may be assigned a particular network address such as, for example, an Internet Protocol (IP) address. Requests sent by client to the IP address may be identified as related to the associated emulated virtual server. In some cases, the identification may be performed by a component running on the same virtual or physical server as the emulated virtual server (e.g., a service moderator, discussed below) or by a component running on a separate server or servers connected by a network (e.g., a communication proxy, also discussed below).

In some implementations, the identified request may also be modified to transform references to generic resource identifiers into references to tenant-specific resource identifiers. For example, if multiple emulated virtual servers are running on a server, and the emulated virtual servers are sharing a single database instance, it may be necessary to rename database tables so that each emulated virtual server has a dedicated copy of the table. Accordingly, a reference to a table name "billing_records" may be transformed into a table name specific to the tenant associated with the emulated virtual server, such as "customer_a_billing_records," while a request associated with another tenant may be transformed into a table name of "customer_b_billing_records." Such transformations may occur relative to any resources that are shared across emulated virtual servers, including, but not limited to, file systems, memory, devices, or any other suitable resource.

The present disclosure may provide several potential advantages. By allowing the reuse of existing APIs associated with IaaS offerings, systems designed to interact with these APIs, such as monitoring, billing, usage tracking, and other systems, may be reused in a PaaS context, in some cases with little or no modification. Further, by allowing platform software such as databases and operating systems to be delivered according to the PaaS model, the present solution may free clients of a cloud system from having to purchase and maintain costly licenses for these products, thereby leading to cost savings.

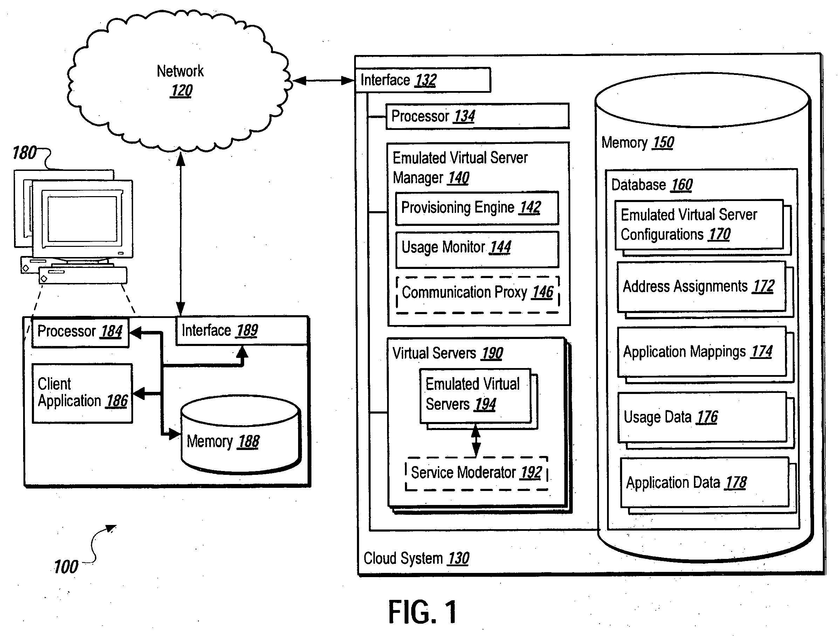

FIG. 1 illustrates an example distributed computing system 100 for enabling multi-tenant virtual servers in a cloud system. The distributed computing system 100 includes a network 120 connecting a cloud system 130 including one or more virtual servers 190, and one or more clients 180. In operation, the cloud system 130 may be operable to manage one or more emulated virtual servers 194 associated with the virtual server 190. In some implementations, emulated virtual servers 194 may be a logical unit within the virtual server 190 executing one or more software applications that are specific to a single tenant of the cloud system 130. For example, a particular tenant running an Apache web server and a MySQL database may manage applications run inside the emulated virtual server 194.

Emulated virtual servers 194 may each be assigned an individual network address, such as an Internet protocol (IP) address. Requests sent to the assigned IP address will be identified as destined for the associated tenant. The cloud system 130, in some cases in conjunction with the service moderator 192 on the virtual server 190, may perform application-specific transformations on requests associated with a particular tenant. For example, if the service moderator 192 receives a Structured Query Language (SQL) query on an IP address associated with emulated virtual server 194, the service moderator 192 may transform the SQL query such that any references to table names are changed to table names specific to the emulated virtual server 194.

The cloud system 130 may also be operable to collect usage statistics associated with the emulated virtual server 194. In some implementations, these usage statistics may be used to bill an associated client for use of the particular emulated virtual server. In some cases, the emulated virtual servers 194 may expose usage statistics in a manner similar to or compatible with a manner in which the virtual server 190 exposes usage statistics. In such cases, systems that are used to monitor usage on the virtual server 190 may also be used to monitor usage of the emulated virtual servers 194. This may allow existing systems to be reused in the multi-tenant environment.

The distributed computing system 100 includes a cloud system 130. In some implementations, the cloud system 130 may be a single computing device including the components shown in FIG. 1. The cloud system 130 may also be a set of distributed computing devices connected by a network for performing the described operations. For example, the emulated virtual server manager 140 may be stored and executed on a separate computing device from the database 160.

The cloud system 130 also includes an interface 132, a processor 134, and a memory 150. The interface 132 is used by the cloud system 130 for communicating with other systems in a distributed environment - including within the distributed computing system 100 - connected to the network 120; for example, the clients 180, as well as other systems communicably coupled to the network 120

(not illustrated). Generally, the interface 132 comprises logic encoded in software and/or hardware in a suitable combination and operable to communicate with the network 120. More specifically, the interface 132 may comprise software supporting one or more communication protocols associated with communications such that the network 120 or interface's hardware is operable to communicate physical signals within and outside of the illustrated distributed computing system 100.

As illustrated in FIG. 1, the cloud system 130 includes a processor 134. Although illustrated as a single processor 134 in FIG. 1, two or more processors may be used according to particular needs, desires, or particular implementations of distributed computing system 100. Each processor 134 may be a central processing unit (CPU), a blade, an application specific integrated circuit (ASIC), a field-programmable gate array (FPGA), or another suitable component. Generally, the processor 134 executes instructions and manipulates data to perform the operations of the cloud system 130. Specifically, the processor 134 may execute the functionality required to receive and respond to requests from the clients 180.

In the illustrated implementation, the cloud system 130 includes an emulated virtual server manager 140. In some implementations, the emulated virtual server manager 140 may be a software processes executing on the cloud system 130 operable to manage, configure, and monitor emulated virtual servers 194 running on virtual server 190. The emulated virtual server manager 140 may also be executed on a server separate from the cloud system 130, and may communicate to the cloud system 130 and the virtual server 190 over the network 120. In some cases, the emulated virtual server manager 140 may be at least partially hosted on the virtual server 190.

The emulated virtual server manager 140 includes a provisioning engine 142. In operation, the provisioning engine 142 may read the emulated virtual server configurations 170, address assignments 172, and application mappings 174 from the database 160, and apply the configurations included therein to the virtual server 190. For example, if the address assignments 172 specify that a particular tenant is assigned the IP address "10.1.1.1" on the virtual server 190, the provisioning engine 142 may configure the virtual server 190 to have the IP address "10.1.1.1." In some implementations, the provisioning engine 142 may indicate such a configuration to the service moderator 192, allowing the service moderator 192 to intercept incoming requests and perform transformation and routing of the request. The service moderator 192 is described in greater detail below. In some cases, the provisioning engine 142 may indicate the configuration to the communication proxy 146 allowing the communication proxy 146 to intercept incoming requests and perform the transformation and routing of the request.

The emulated virtual server manager 140 also includes a usage monitor 144. In operation, the usage monitor 144 may be operable to receive, retrieve, or monitor usage statistics generated by the emulated virtual servers 194. The usage monitor 144 may insert this data into the database 160 as usage data 176. In some implementations, the usage monitor 144 may be a component developed for use with the virtual server 190 that is reused to monitor usage on the emulated virtual servers 194. As the emulated virtual servers 194 provide usage statistics in a similar or compatible manner with the virtual server 190, such reuse of the usage monitor 144 may be possible.

In some cases, the usage monitor 144 may retrieve statistics from the emulated virtual servers 194 by reading from a standard location in which such statistics are published by physical servers and virtual servers. For example, the usage monitor 144 may read a "/proc" file system provided by the emulated virtual servers 194 in order to retrieve usage statistics. In some implementations, the usage monitor 144 may receive Simple Network Management Protocol (SNMP) messages from the emulated virtual servers indicating usage statistics in a similar manner as the virtual server 190. In some instances, the usage monitor 144 may retrieve usage statistics related to an individual application or platform using mechanisms, protocols, or other techniques originally designed for use in an IaaS context. By allowing reuse of these techniques, existing monitoring and management programs may be reused.

In some implementations, the emulated virtual server manager 140 may include a communication proxy 146. In operation, the communication proxy 146 may intercept messages intended for the emulated virtual servers 194, determine which emulated virtual server the message is intended for based on the IP address the message was sent to, perform any configured transformations on the request, and route the request to the correct emulated virtual server. In some implementations, the communication proxy 146 may be omitted, and replaced by the service moderator 192 executing on the virtual server 190 and operable to perform the same functions. In some cases, the communication proxy 146 and the service moderator 192 may both be present in the distributed system 100, with some requests being intercepted by the communication proxy 146, and others going directly to the virtual server 190 where they are intercepted by service moderator 192.

As shown, the cloud system 130 also includes a memory 150, or multiple memories 150. The memory 150 may include any type of memory or database module and may take the form of volatile and/or non-volatile memory including, without limitation, magnetic media, optical media, random access memory (RAM), read-only memory (ROM), removable media, or any other suitable local or remote memory component. The memory 150 may store various objects or data, including caches, classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the cloud system 130. Additionally, the memory 150 may include any other appropriate data, such as VPN applications, firmware logs and policies, firewall policies, a security or access log, print or other reporting files, as well as others.

As illustrated in FIG. 1, memory 150 includes or references data and information associated with and/or related to providing the integrated testing framework. As illustrated, memory 150 includes a database 160. The database 160 may be one of or a combination of several commercially available database and non-database products. Acceptable products include, but are not limited to, SAP® HANA DB, SAP® MaxDB, Sybase® ASE, Oracle® databases, IBM® Informix® databases, DB2, MySQL, Microsoft SQL Server®, Ingres®, PostgreSQL, Teradata, Amazon SimpleDB, and Microsoft® Excel, as well as other suitable database and non-database products. Further, database 160 may be operable to process queries specified in any structured or other query language such as, for example, SQL.

In the illustrated implementation, the database 160 includes emulated virtual server configurations 170. The emulated virtual server configurations 170 may include information regarding how a tenant will use emulated virtual servers, such as what applications should be included in the emulated virtual server, how the application should be initialized and configured, and any other suitable information regarding the tenant's use of the emulated virtual servers. In some implementations, the emulated virtual server configurations 170 may be stored in one or more database tables, and may also be combined with any of the other types of data shown in the database 160, or any other suitable data.

Database 160 also includes address assignments 172. The address assignments 172 may specify particular network addresses to associate to emulated virtual servers associated with particular tenants. This configuration may be used by the communication proxy 146 and/or the service moderator 192 to identify, route, and transform requests sent to the particular network address. In some implementations, the address assignment 172 may specify a network address to assign to an emulated virtual server (e.g., 194) on a particular virtual server (e.g., 190). For example, the address assignments 172 may specify that an emulated virtual server associated with tenant "Customer A" on virtual server 190 should be assigned IP address "10.1.1.1," and that an emulated virtual server associated with tenant "Customer B" should be assigned IP address "10.1.1.2."

In the illustrated implementation, database 160 also includes application mappings 174. The application mappings 174 may specify transformations to apply to requests received at the virtual server 194 particular tenant. The transformations may be operable to change parts of the request from referring to generic resources to referring to tenant-specific versions of those resources. For example, the application mappings 174 may include a mapping for a database application for a particular tenant stating that any table names should be prepended with the string "customer_a." In such a case, the service moderator 192 and or the communication proxy 146 may receive a request referring to tablename "billing_records." The service moderator 192 and/or the communication proxy 146 may transform the tablename into the tenant-specific tablename "customer_a_billing_records." In some implementations, the transformations may be associated with names of resources, such as webpages, files, devices, network resources, programs, or any other suitable resource.

As shown, the database 160 also includes usage data 176. In some implementations, the usage data 176 may include data associated with usage of the one or more input emulated virtual servers 194. In some cases, the usage data 176 may also include usage data for the virtual server 190. The usage data 176 may include various usage statistics associated with the emulated virtual servers 194, including, but not limited to, CPU usage, memory usage, disk usage, network usage, requests processed per second statistics, response time statistics, or any other suitable usage data. In some cases, the usage data 176 is stored in a single table with a column for each type of usage statistic, with each row being associated with an emulated virtual server and a time period. The usage data may also be stored in multiple tables within the database 160, such that each table includes data associated with one or more types of usage statistics.

In some cases, the usage data 176 is collected and inserted into the database 160 by the usage monitor 144. The usage data 176 may also be compiled and stored in the database 160 by external systems or programs, such as network monitoring programs. The usage data 176 may also be compiled and stored by the emulated virtual servers 194, and inserted directly into the database 160 by these components.

The illustrated environment of FIG. 1 also includes a client 180, or multiple clients 180. Client 180 may be any computing device operable to connect to or communicate with at least the cloud system 130 via the network 120 using a wireline or wireless connection. In general, client 180 comprises an electronic computer device operable to receive, transmit, process, and store any appropriate data associated with distributed computing system 100 of FIG. 1.

There may be any number of clients 180 associated with, or external to, distributed computing system 100. For example, while the illustrated system 100 includes one client 180, alternative implementations of system 100 may include multiple clients 180 communicably coupled to the cloud system 130 and/or the network 120, or any other number suitable to the purposes of system 100. Additionally, there may also be one or more additional clients 180 external to the illustrated portion of system 100 that are capable of interacting with the system 100 via the network 120. Further, the term "client" and "user" may be used interchangeably as appropriate without departing from the scope of this disclosure. Moreover, while client 180 is described in terms of being used by a single user, this disclosure contemplates that many users may use one computer, or that one user may use multiple computers.

Illustrated client 180 is intended to encompass any computing device such as a desktop computer, laptop/notebook computer, wireless data port, smart phone, personal data assistant (PDA), tablet computing device, one or more processors within these devices, or any other suitable processing device. For example, client 180 may comprise a computer that includes an input device, such as a keypad, touch screen, or other device that can accept user information, and an output device that conveys information associated with the operation of the cloud system 130 or client 180 itself, including digital data, visual information, or a graphical user interface (GUI). Client 180 may include an interface 189, a processor 184, a memory 188 and a client application 186. Client 180 may be used by a user to access the cloud system 130, to view or change items in the database 160 (such as emulated virtual server configurations 170), or to view items in the database 160 (such as usage data 176).

The distributed computer system 100 may enable an IaaS provisioning and monitoring model to be extended to PaaS and SaaS applications. The IaaS provisioning model is driven by the infrastructure level resources: the server and its internal resources, storage (which is shared between servers), and network resources. The provisioning process, resulting in an emulated virtual server (e.g., 194), may be automatically operated by using an API.

Each emulated virtual server 194 may be associated with one or more server attributes. The attributes may include, but are not limited to elastic IP addresses, fully qualified domain names (FQDNs), a mode (e.g., "off," "starting," "on," "stopping"), an allocated memory size, an allocated central processing unit (CPU) power, an Allocated local storage type(s) and size, an installed operating system include type, version, and patch level, one or more attached networks, one or more attached shared storage services, or a template from which the server was instantiated. The emulated virtual server 194 may also include one or more installed services, each installed service associated with a service identification and version, a collection of ports, and/or a mode ("off," "starting," "on," "stopping"). The virtual server may also produce usage information such as CPU, memory and storage utilization (size, access) over time in actual and allocation measures. The metering information may be consumed by monitoring utilities such as rstatd, Nagios® and/or Microsoft® Windows Resource Monitor.

The client 180 may perform various operations relative to the emulated virtual servers 194. These operations may be similar to operations the client 180 may perform relative to the virtual server 190. The operations may include, but are not limited to:

Provisioning - The client 180 may request an emulated virtual server with specified attributes from the cloud system 130 using an API. The response may include the network identity, credentials and actual attributes of the provisioned emulated virtual server.

Withdrawal - The client 180 may return the provisioned emulated virtual server to the cloud system 130.

Modify resource allocation - The client 180 may request to extend/reduce resources allocation for an already provisioned emulated virtual server.

"Turn on" - The client 180 may request to turn on the emulated virtual server.

"Shutdown" - The client 180 may shut down the emulated virtual server.

"Suspend/Pause" - The client 180 may temporarily pauses an emulated virtual server for which may be resumed from the same state.

"Resume": The client 180 may resume a suspended emulated virtual server.

"Take a snapshot" - The client 180 requests a persistent snapshot of the emulated virtual server.

"Revert to snapshot" - The client 180 may revert the emulated virtual server into the exact state of the persistent snapshot.

"Clone" - A new server is provisioned with an exact duplication of the state of the emulated virtual server with a new network identity so both servers can co-exist in the same network.

The client 180 may also control the emulated virtual server from the cloud system 130 via an automated API. Such an automated service might have the following operations:

"Install" - The client 180 may request that the cloud system 130 install a application on an emulated virtual server with a specific version and identification from a repository of applications

"Remove" - The client 180 may request the removal of an application that was previously installed by the cloud system 130.

"Upgrade" - The client 180 may request the cloud system 130 to upgrade an installed application and the associated data and configuration while maintaining a fully functional service.

"Configure" - The client 180 may request to modify a configuration of an application which is installed on an emulated virtual server in a governed manner using an API which is provided by the cloud system 130.

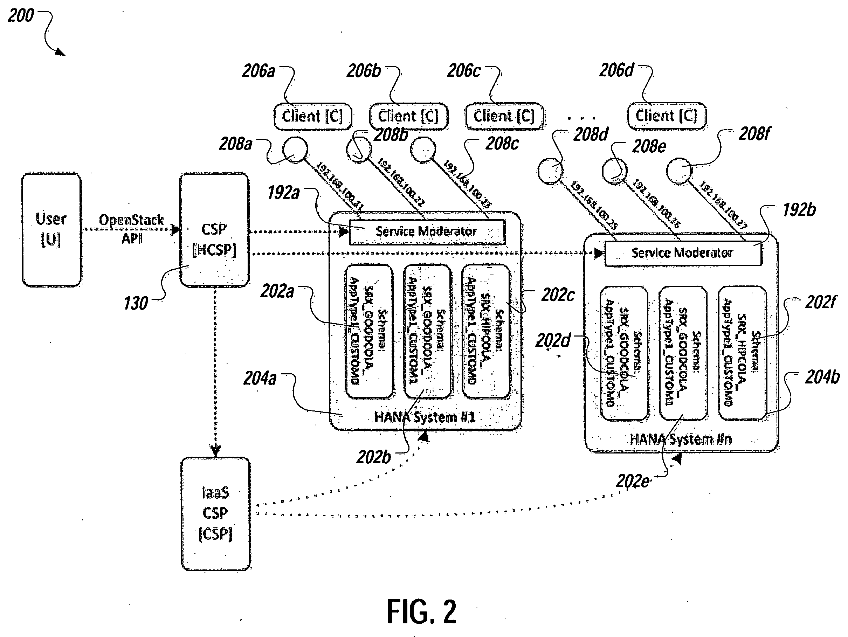

FIG. 2 illustrates an example system 200 for providing access to multiple tenants 202a-f on servers 204a-b in a cloud system to multiple clients 206a-d. As shown, service moderators 192a-b are located on each of the servers 204a-b. The servers 204a-b may be either physical or virtual servers. Each of the servers 204a-b is configured with a number of IP addresses 208a-f, one for each of the tenants 202a-f.

Each service moderator 192a-b may explicitly listen to the dedicated IP address from the IP address 208a-f for each tenant. The application level platform services may accept connections for the dedicated IP address. The accepting point origin may be used as a platform internal user/tenant identifier. The service moderators 192a-b may use the tenant-identifier to map schema and table names in JDBC/ODBC/ODBO access statements to the internally named tenant-specific isolated resource names, as described relative to FIG. 1. Information about fine-grained quota and resource consumption (e.g., metrics associated with individual applications running on the emulated virtual servers 194) may be translated into an emulated monitoring service that is exposed on the dedicated IP address, for example, by sending SNMP traps reporting the fine-grained quota and resource consumption. Operating system shell interfaces may be emulated to the extent needed for integration with the cloud environment (for example /proc/cpuinfo, /proc/meminfo).

The solution may be scaled out by having a single cloud system 130 with multiple physical or virtual servers 204a-b. In this case, integration of the cloud system 130 with a managed LAN switch may be considered for service reliability in server migration.

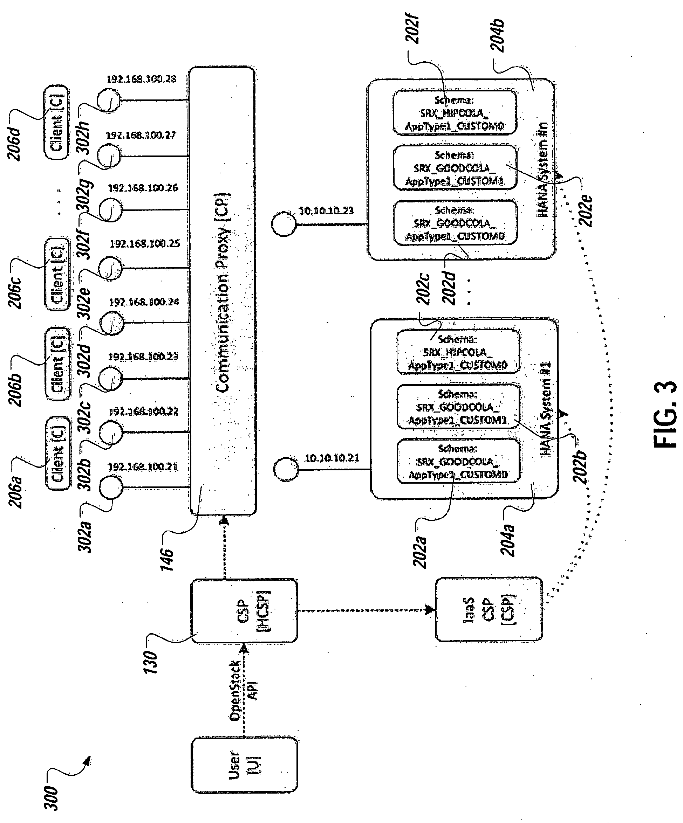

FIG. 3 illustrates an example system for providing access to multiple tenants 202a-f on servers 204a-b in a cloud system to multiple clients 206a-d using a communication proxy 146. As shown, the communication proxy 146 listens on multiple IP addresses 302a-h. In some cases, the communication proxy 146 may listen on one IP address per tenant. The communication proxy may also listen on multiple IP addresses per tenant. The communication proxy 146 may calculate or estimates user level resource consumption metrics, including those exposed by the platform and metrics measured by the communication proxy 146 itself, such as response time. The communication proxy 146 may publish the calculated or estimated resource consumption metrics as an emulated OS level monitoring service on the dedicated IP address.

The communication proxy 146 may also listen on application level ports. It may translate the accepting IP identity to an identifier that is supported by the current platform. Such an identifier may be configured by the cloud system 130 component when the emulated server is configured. If the platform is a web server, the identifier may be a virtual service. In such a case, the communication proxy may act as a standard reverse proxy with translation rules for each listening IP. If the platform is a database, the communication proxy 146 may add a prefix at the SQL level for each database schema and database user. The communication proxy 146 may need to remove this prefix from the responses in the right context.

The communication proxy 146 may provide several potential benefits. When fine-grained resources of a single tenant are located on different physical servers, this is hidden from the clients by the communication proxy 146. This abstraction allows for resource to server placement optimizations. For instance, similar web objects can be placed on the same web server to maximize storage de-duplication, or a database table object can be placed in proximity to other database tables to optimize query processing.

The communication proxy 146 may be used to optimize quality of service, by throttling, prioritization and load balancing. For example, if a maximal transaction throughput is achieved at 70% CPU utilization, the communication proxy 146 may limit new requests to maintain this load level. Multiple instances of a fine-grained resource such as a database table may reside on different physical servers to support a larger number of requests rate. The communication proxy 146 may prioritize access to such resources by client. For example, a "Gold" client may have priority over a "Silver" client.

By implementing the communication proxy 146 as a separate component, application and platform independent security may be enforced. In some cases, the communication proxy 146 may also be a central point for independent service level agreement (SLA) and performance metering.

In some implementations, the communication proxy 146 may be implemented as two components - one in proximity to the client, for example at the client's office, and one in proximity to the platform - for example in the cloud. Between the components, a secure link with optimization and WAN acceleration technology may be applied.

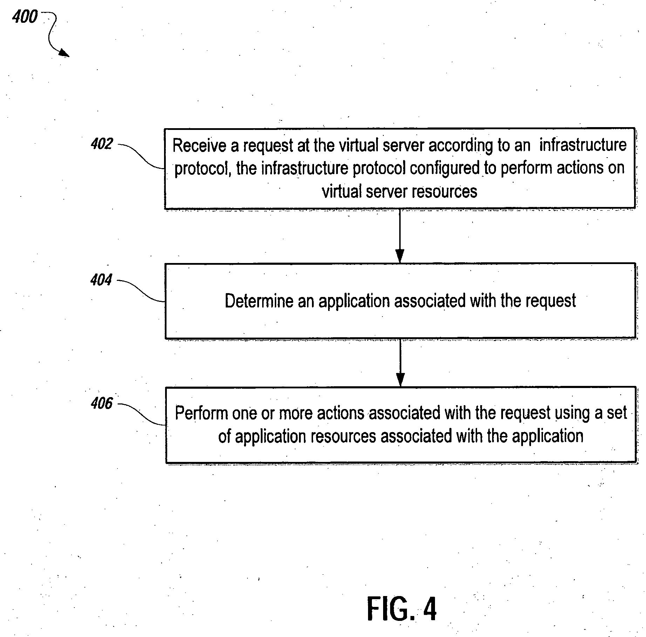

FIG. 4 illustrates an example method for enabling multi-tenant virtual servers in a cloud system. For clarity of presentation, the description that follows generally describes method 400 in the context of FIG. 1. However, method 400 may be performed, for example, by any other suitable system, environment, software, and hardware, or a combination of systems, environments, software, and hardware, as appropriate. For example, one or more of the cloud system, the client, or other computing device (not illustrated) can be used to execute method 400 and obtain any data from the memory of the client, the cloud system, or the other computing device (not illustrated).

At 402, a request is received at a virtual server according to an infrastructure protocol, the infrastructure protocol configured to perform actions on virtual server resources. In some instances, the infrastructure protocol may be a protocol defined for use in an IaaS context, including, but not limited to, the Amazon® EC2 API, the OpenStack® API, the Microsoft® HyperV API, or any other suitable protocol. At 404, an application associated with the request is determined. In some cases, the determination is performed by examining the destination IP address and/or port associated with the request. At 406, one or more actions associated with the request are performed using a set of application resources associated with the application. In some cases, the application resources may be partitioned resources of the virtual server associated with the application, such as dedicated database tables, file systems, or other resources. In some implementations, statistics associated with these application resources may be tracked and monitored.

In some implementations, one or more network addresses are determined, each network address uniquely associated with one of the one or more tenants. In some implementations, the one or more network addresses include IP addresses. The one or more network addresses may also include IP ports, such that an IP address and port combination is uniquely associated with a tenant. The one or more network addresses may also include any other suitable type of network address, such as, IPv6 addresses, Uniform Resource Locators (URLs), or any other suitable type of network address.

In some cases, a request from one of the one or more tenants is received, the request associated with a particular network address of the one or more network addresses. In some implementations, the request is received via an API associated with an IaaS system, such as, for example, the Amazon® EC2 API, the OpenStack® API, the Microsoft® HyperV API, or any other suitable API. In some cases, the request may be formatted according to HTTP. Identifying the particular network address may include identifying the IP address and port to which the request was sent.

In some implementations, a determination is made that a network address of the one or more network addresses that is uniquely associated with the one or more tenants matches the particular network address. In some implementations, this determination includes consulting address assignments (e.g., 172) in a database (e.g., 160). In some implementations, the determination may be made by a service moderator (e.g., 192) associated with a virtual server. The determination may also be made by a communication proxy (e.g., 146) located separately from the virtual server, and receiving brokering requests for multiple virtual servers.

In some implementations, the request is presented to a particular tenant associated with the determined network address. In some implementations, the request is presented to an emulated virtual server (e.g., 194) associated with the tenant on the virtual server (e.g., 190). In some cases, visiting the request includes feeding the request as input to the emulated virtual server, such as by sending the request to an open network port. Presenting the request may also include placing the request in a known location for the emulated virtual server to read, such as the location of the file system or within a database.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, e.g., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example Linux, UNIX, Windows, Mac OS, Android, iOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a central processing unit (CPU), a FPGA (field programmable gate array), or an ASIC (application specific integrated circuit).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media (transitory or non-transitory, as appropriate) suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), or plasma monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN), a wide area network (WAN), e.g., the Internet, and a wireless local area network (WLAN).

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order (e.g., FIG. 5), this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results. Accordingly, the above description of example implementations does not define or constrain this disclosure.

## Claims

1. A computer-implemented method for enabling multi-tenant virtual servers in a cloud system, the method executed by one or more processors, the method comprising:
receiving a request at a virtual server (190, 204a, 204b) according to an infrastructure protocol, the infrastructure protocol configured to perform actions on virtual server resources, the infrastructure protocol being a protocol defined for use in an infrastructure as a service (IaaS) context;
identifying one or more tenants (202a, 202b, 202c, 202d, 202e, 202f) associated with the virtual server in the cloud system;
determining one or more network addresses, each network address uniquely associated with one of the one or more tenants;
identifying a particular network address associated with the request;
determining a particular tenant associated with the particular network address;
determining an application associated with the request, the application being associated with the particular tenant;
identifying a requested resource associated with the request, the requested resource associated with the application and the particular tenant, the requested resource identified in the request in a generic format;
transforming the request to identify the requested resource in a format specific to the particular tenant; and
performing one or more actions associated with the request using a set of application resources associated with the application, the set of application resources being partitioned resources of the virtual server associated with the application.

2. The method of claim 1, wherein receiving the request is performed by a communication proxy separate from the virtual server.

3. The method of claim 1 or 2, wherein the requested resource is a database table and transforming the request comprises transforming a table name associated with the database table into a table name specific to the particular tenant; and/or
wherein the requested resource is a web page and transforming the request comprises transforming a Uniform Resource Locator (URL) associated with the web page into a URL specific to the particular tenant.

4. The method of any one of claims 1 to 3, wherein the determined network address is an Internet Protocol (IP) address.

5. The method of any one of claims 1 to 4, further comprising providing usage statistics associated with the application resources,
wherein providing usage statistics associated with the application resources may include providing at least one of: requests per second, memory usage, or concurrent connections.

6. The method of claim 5, wherein providing usage statistics associated with the application resources includes updating a standard file system location that indicates usage statistics for a virtual server; and/or
wherein providing usage statistics associated with the application resources includes providing Simple Network Management Protocol (SNMP) messages that indicate the usage statistics.

7. A computer storage medium encoded with a computer program, the program comprising instructions that when executed by one or more computers cause the one or more computers to perform the method according to any one of claims 1 to 6.

8. A system for enabling multi-tenant virtual servers in a cloud system, the system comprising one or more computers configured to perform operations comprising:
receiving a request at a virtual server (190, 204a, 204b) according to an infrastructure protocol, the infrastructure protocol configured to perform actions on virtual server resources, the infrastructure protocol being a protocol defined for use in an infrastructure as a service (IaaS) context;
identifying one or more tenants (202a, 202b, 202c, 202d, 202e, 202f) associated with the virtual server in the cloud system;
determining one or more network addresses, each network address uniquely associated with one of the one or more tenants;
identifying a particular network address associated with the request;
determining a particular tenant associated with the particular network address;
determining an application associated with the request, the application being associated with the particular tenant;
identifying a requested resource associated with the request, the requested resource associated with the application and the particular tenant, the requested resource identified in the request in a generic format;
transforming the request to identify the requested resource in a format specific to the particular tenant; and
performing one or more actions associated with the request using a set of application resources associated with the application, the set of application resources being partitioned resources of the virtual server associated with the application.

9. The system of claim 8, wherein receiving the request is performed by a communication proxy separate from the virtual server.

10. The system of claim 8 or 9, wherein the requested resource is a database table and transforming the request comprises transforming a table name associated with the database table into a table name specific to the particular tenant; and/or
wherein the requested resource is a web page and transforming the request comprises transforming a Uniform Resource Locator (URL) associated with the web page into a URL specific to the particular tenant.

11. The system of any one of claims 8 to 10, wherein the operations further comprise providing usage statistics associated with the application resources; and
wherein providing usage statistics associated with the application resources may include:
providing at least one of: requests per second, memory usage, or concurrent connections;
updating a standard file system location that indicates usage statistics for a virtual server; and
providing Simple Network Management Protocol (SNMP) messages that indicate the usage statistics.

## Patentansprüche

1. Ein computerimplementiertes Verfahren zur Ermöglichung von mandantenfähigen virtuellen Servern in einem *Cloud*-System, wobei das Verfahren von einem oder mehreren Prozessoren ausgeführt wird und das Verfahren Folgendes umfasst:
empfangen einer Anfrage bei einem virtuellen Server (190, 204a, 204b) entsprechend einem Protokoll einer Infrastruktur, wobei das Infrastrukturprotokoll konfiguriert ist, um Operationen an Ressourcen von virtuellen Servern durchzuführen, wobei das Infrastrukturprotokoll ein Protokoll ist, das zur Verwendung im Kontext einer Infrastruktur als Dienstleistung (*Infrastructure* as a *service - IaaS)* definiert wird;
identifizieren von einem oder mehreren Mandanten (202a, 202b, 202c, 202d, 202e, 202f), die dem virtuellen Server im *Cloud*-System zugeordnet sind;
bestimmen von einer oder mehreren Netzwerkadressen, wobei jede Netzwerkadresse dem einen unter dem oder den Mandanten eindeutig zugeordnet ist;
identifizieren einer bestimmten Netzwerkadresse, die der Anfrage zugeordnet ist;
bestimmen eines bestimmten Mandanten, der der bestimmten Netzwerkadresse zugeordnet ist;
bestimmen einer Anwendung, die der Anfrage zugeordnet ist, wobei die Anwendung dem bestimmten Mandanten zugeordnet wird;
identifizieren einer angefragten Ressource, die der Anfrage zugeordnet ist, wobei die angefragte Ressource der Anwendung und dem bestimmten Mandanten zugeordnet ist, wobei die angefragte Ressource in der Anfrage in einem generischen Format identifiziert wird;
transformieren der Anfrage, um die angefragte Ressource in einem Format zu identifizieren, das für den bestimmten Mandanten spezifisch ist; und
durchführen von einer oder mehreren Operationen, die der Anfrage zugeordnet sind, unter Verwendung einer Sammlung von Anwendungs-Ressourcen, die der Anwendung zugeordnet sind, wobei die Sammlung von Anwendungs-Ressourcen partitionierte Ressourcen des virtuellen Servers sind, die der Anwendung zugeordnet sind.

2. Das Verfahren nach Anspruch 1, wobei das Empfangen der Anfrage von einem Kommunikations-Proxy durchgeführt wird, der vom virtuellen Server separat ist.

3. Das Verfahren nach Anspruch 1 oder 2, wobei die angefragte Ressource eine Datenbanktabelle ist, und das Transformieren der Anfrage das Transformieren eines der Datenbanktabelle zugeordneten Tabellennamens in einen Tabellennamen umfasst, der für den bestimmten Mandanten spezifisch ist; und/oder wobei die angefragte Ressource eine Webseite ist, und das Transformieren der Anfrage das Transformieren eines der Webseite zugeordneten einheitlichen Ressourcenortsbezeichners *(Uniform Resource Locator - URL)* in eine URL umfasst, die für den bestimmten Mandanten spezifisch ist.

4. Das Verfahren nach irgendeinem der Ansprüche 1 bis 3, wobei die bestimmte Netzwerkadresse eine Internetprotokoll (*Internet Protocol - IP)* -Adresse ist.

5. Das Verfahren nach irgendeinem der Ansprüche 1 bis 4, das des Weiteren das Bereitstellen von Nutzungsstatistiken umfasst, die den Anwendungs-Ressourcen zugeordnet sind,
wobei das Bereitstellen von Nutzungsstatistiken, die den Anwendungs-Ressourcen zugeordnet sind, das Bereitstellen von mindestens einem der Folgenden beinhalten kann: Anfragen pro Sekunde, Speichernutzung oder parallele Verbindungen.

6. Das Verfahren nach Anspruch 5, wobei das Bereitstellen von Nutzungsstatistiken, die den Anwendungs-Ressourcen zugeordnet sind, das Aktualisieren eines standardmäßigen Dateisystem-Speicherortes beinhaltet, der Nutzungsstatistiken für einen virtuellen Server angibt; und/oder
wobei das Bereitstellen von Nutzungsstatistiken, die den Anwendungs-Ressourcen zugeordnet sind, das Bereitstellen von *Simple Network Management Protocol (SNMP)* Nachrichten beinhaltet, die die Nutzungsstatistiken angeben.

7. Ein Computerspeichermedium, das mit einem Computerprogramm codiert ist, wobei das Programm Anweisungen umfasst, die, wenn sie von einem oder mehreren Computern ausgeführt werden, den einen oder die mehreren Computer dazu bringen, das Verfahren nach irgendeinem der Ansprüche 1 bis 6 durchzuführen.

8. Ein System zur Ermöglichung von mandantenfähigen virtuellen Servern in einem *Cloud*-System, wobei das Verfahren einen oder mehrere Computer umfasst, um Operationen durchzuführen, die Folgendes umfassen:
empfangen einer Anfrage bei einem virtuellen Server (190, 204a, 204b) entsprechend einem Protokoll einer Infrastruktur, wobei das Infrastrukturprotokoll konfiguriert ist, um Operationen an Ressourcen von virtuellen Servern durchzuführen, wobei das Infrastrukturprotokoll ein Protokoll ist, das zur Verwendung im Kontext einer Infrastruktur als Dienstleistung (*Infrastructure as a service - IaaS*) definiert wird;
identifizieren von einem oder mehreren Mandanten (202a, 202b, 202c, 202d, 202e, 202f), die dem virtuellen Server im *Cloud*-System zugeordnet sind;
bestimmen von einer oder mehreren Netzwerkadressen, wobei jede Netzwerkadresse dem einen unter dem oder den Mandanten eindeutig zugeordnet ist;
identifizieren einer bestimmten Netzwerkadresse, die der Anfrage zugeordnet ist;
bestimmen eines bestimmten Mandanten, der der bestimmten Netzwerkadresse zugeordnet ist;
bestimmen einer Anwendung, die der Anfrage zugeordnet ist, wobei die Anwendung dem bestimmten Mandanten zugeordnet wird;
identifizieren einer angefragten Ressource, die der Anfrage zugeordnet ist, wobei die angefragte Ressource der Anwendung und dem bestimmten Mandanten zugeordnet ist, wobei die angefragte Ressource in der Anfrage in einem generischen Format identifiziert wird;
transformieren der Anfrage, um die angefragte Ressource in einem Format zu identifizieren, das für den bestimmten Mandanten spezifisch ist; und
durchführen von einer oder mehreren Operationen, die der Anfrage zugeordnet sind, unter Verwendung einer Sammlung von Anwendungs-Ressourcen, die der Anwendung zugeordnet sind, wobei die Sammlung von Anwendungs-Ressourcen partitionierte Ressourcen des virtuellen Servers sind, die der Anwendung zugeordnet sind.

9. Das System nach Anspruch 8, wobei das Empfangen der Anfrage von einem Kommunikations-Proxy durchgeführt wird, der vom virtuellen Server separat ist.

10. Das System nach Anspruch 8 oder 9, wobei die angefragte Ressource eine Datenbanktabelle ist, und das Transformieren der Anfrage das Transformieren eines der Datenbanktabelle zugeordneten Tabellennamens in einen Tabellennamen umfasst, der für den bestimmten Mandanten spezifisch ist; und/oder
wobei die angefragte Ressource eine Webseite ist, und das Transformieren der Anfrage das Transformieren eines der Webseite zugeordneten einheitlichen Ressourcenortsbezeichners (*Uniform Resource Locator - URL*) in eine URL umfasst, die für den bestimmten Mandanten spezifisch ist.

11. Das System nach irgendeinem der Ansprüche 8 bis 10, wobei die Operationen des Weiteren das Bereitstellen von Nutzungsstatistiken umfassen, die den Anwendungs-Ressourcen zugeordnet sind; und
wobei das Bereitstellen von Nutzungsstatistiken, die den Anwendungs-Ressourcen zugeordnet sind, Folgendes beinhalten kann:
bereitstellen von mindestens einem der Folgenden: Anfragen pro Sekunde, Speichernutzung oder parallele Verbindungen;
aktualisieren eines standardmäßigen Dateisystem-Speicherortes beinhaltet, der Nutzungsstatistiken für einen virtuellen Server angibt; und
bereitstellen von *Simple Network Management Protocol (SNMP)* Nachrichten, die die Nutzungsstatistiken angeben.

## Revendications

1. Un procédé mis en oeuvre par ordinateur pour activer (*enabling*) des serveurs virtuels multi-locataires (*multi-tenant*) dans un système informatique en nuage, le procédé étant exécuté par un ou plusieurs processeurs, le procédé comprenant le fait de :
recevoir une demande au niveau d'un serveur virtuel (190, 204a, 204b) conformément à un protocole d'infrastructure, le protocole d'infrastructure étant configuré pour effectuer des actions sur des ressources de serveur virtuel, le protocole d'infrastructure étant un protocole défini pour un emploi dans un contexte d'infrastructure comme service (*infrastructure* as a *service - IaaS*) ;
identifier un ou plusieurs locataires (202a, 202b, 202c, 202d, 202e, 202f) associés au serveur virtuel dans le système informatique en nuage ;
déterminer une ou plusieurs adresses de réseau, chaque adresse de réseau étant associée de manière unique à un parmi le ou les locataires ;
identifier une adresse particulière de réseau associée à la demande ;
déterminer un locataire particulier associé à l'adresse particulière de réseau ;
déterminer une application associée à la demande, l'application étant associée au locataire particulier ;
identifier une ressource demandée associée à la demande, la ressource demandée étant associée à l'application et au locataire particulier, la ressource demandée étant identifiée dans la demande dans un format générique ;
transformer la demande pour identifier la ressource demandée dans un format spécifique pour le locataire particulier ; et
effectuer une ou plusieurs actions associées à la demande en utilisant un ensemble de ressources d'application associé à l'application, l'ensemble de ressources d'application consistant en ressources partitionnées du serveur virtuel associé à l'application.

2. Le procédé d'après la revendication 1, sachant que le fait de recevoir la demande est effectué par un serveur mandataire de communication distinct du serveur virtuel.

3. Le procédé d'après la revendication 1 ou 2, sachant que la ressource demandée est une table de base de données et que le fait de transformer la demande comprend le fait de transformer un nom de table associé à la table de base de données en un nom de table spécifique pour le locataire particulier ; et/ou
sachant que la ressource demandée est une page web et que le fait de transformer la demande comprend le fait de transformer un localisateur de ressource uniforme (*Uniform Resource Locator - URL*) associé à la page web en une URL spécifique pour le locataire particulier.

4. Le procédé d'après une quelconque des revendications de 1 à 3, sachant que l'adresse de réseau déterminée est une adresse de protocole Internet *(Internet Protocol - IP).*

5. Le procédé d'après une quelconque des revendications de 1 à 4, comprenant en outre le fait de fournir des statistiques d'utilisation associées aux ressources d'application,
sachant que le fait de fournir des statistiques d'utilisation associées aux ressources d'application peut inclure le fait de fournir au moins un des suivants : demandes par seconde, utilisation de mémoire, ou connexions simultanées.

6. Le procédé d'après la revendication 5, sachant que le fait de fournir des statistiques d'utilisation associées aux ressources d'application inclut le fait de mettre à jour un emplacement de système standard de fichiers dénotant les statistiques d'utilisation pour un serveur virtuel ; et/ou
sachant que le fait de fournir des statistiques d'utilisation associées aux ressources d'application inclut le fait de fournir des messages à protocole de gestion de réseau simple (*Simple Network Management Protocol - SNMP*) dénotant les statistiques d'utilisation.

7. Un support de stockage informatique codé avec un programme informatique, le programme comprenant des instructions lesquelles, quand elles sont exécutées par un ou plusieurs ordinateurs amènent ce ou ces ordinateurs à effectuer le procédé d'après une quelconque des revendications de 1 à 6.

8. Un système pour activer (*enabling*) des serveurs virtuels multi-locataires (*multi*-*tenant*) dans un système informatique en nuage, le système comprenant un ou plusieurs ordinateurs configurés pour effectuer des opérations comprenant le fait de :
recevoir une demande au niveau d'un serveur virtuel (190, 204a, 204b) conformément à un protocole d'infrastructure, le protocole d'infrastructure étant configuré pour effectuer des actions sur des ressources de serveur virtuel, le protocole d'infrastructure étant un protocole défini pour un emploi dans un contexte d'infrastructure comme service (*infrastructure as* a *service - IaaS*) ;
identifier un ou plusieurs locataires (202a, 202b, 202c, 202d, 202e, 202f) associés au serveur virtuel dans le système informatique en nuage ;
déterminer une ou plusieurs adresses de réseau, chaque adresse de réseau étant associée de manière unique à un parmi le ou les locataires ;
identifier une adresse particulière de réseau associée à la demande ;
déterminer un locataire particulier associé à l'adresse particulière de réseau ;
déterminer une application associée à la demande, l'application étant associée au locataire particulier ;
identifier une ressource demandée associée à la demande, la ressource demandée étant associée à l'application et au locataire particulier, la ressource demandée étant identifiée dans la demande dans un format générique ;
transformer la demande pour identifier la ressource demandée dans un format spécifique pour le locataire particulier ; et
effectuer une ou plusieurs actions associées à la demande en utilisant un ensemble de ressources d'application associé à l'application, l'ensemble de ressources d'application consistant en ressources partitionnées du serveur virtuel associé à l'application.

9. Le système d'après la revendication 8, sachant que le fait de recevoir la demande est effectué par un serveur mandataire de communication distinct du serveur virtuel.

10. Le système d'après la revendication 8 ou 9, sachant que la ressource demandée est une table de base de données et que le fait de transformer la demande comprend le fait de transformer un nom de table associé à la table de base de données en un nom de table spécifique pour le locataire particulier ; et/ou
sachant que la ressource demandée est une page web et que le fait de transformer la demande comprend le fait de transformer un localisateur de ressource uniforme (*Uniform Resource Locator - URL*) associé à la page web en une URL spécifique pour le locataire particulier.

11. Le système d'après une quelconque des revendications de 8 à 10, sachant que les opérations comprenant en outre le fait de fournir des statistiques d'utilisation associées aux ressources d'application ; et
sachant que le fait de fournir des statistiques d'utilisation associées aux ressources d'application peut inclure le fait de:
fournir au moins un des suivants : demandes par seconde, utilisation de mémoire, ou connexions simultanées ;
mettre à jour un emplacement de système standard de fichiers dénotant les statistiques d'utilisation pour un serveur virtuel ; et de
fournir des messages à protocole de gestion de réseau simple (*Simple Network Management Protocol - SNMP)* dénotant les statistiques d'utilisation.
